# DEMANDE DE BREVET EUROPEEN

(11) **EP 1 308 669 A1**
(43) Date de publication de la demande: **07.05.2003**
(21) Numéro de dépôt: 02292605.9
(22) Date de dépôt: 21.10.2002
(51) Int. Cl.: F21V 11/16, F21V 14/08, F21S 8/10

(54) **Dispositif d'éclairage de type elliptique pour véhicule automobile**

(30) Priorité: 30.10.2001 FR 0114184
(71) Demandeur: VALEO VISION, 93012 Bobigny Cédex (FR)
(72) Inventeur: Albou, Pierre, 75013 Paris (FR); Blusseau, Eric, 49000 Angers (FR); Jeannot, Laurent, 77250 Moret sur Loing (FR)

(57) **Abrégé**

La présente invention concerne un dispositif d'éclairage pour véhicule automobile, comportant une source lumineuse (14) située au premier foyer d'un réflecteur (20) de type elliptique, une lentille convergente (30) étant disposée en avant de la source lumineuse (14) de telle manière que le deuxième foyer du réflecteur elliptique (20) soit contenu dans le plan focal objet de la lentille convergente (30), les premier et deuxième foyers du réflecteur elliptique (20) définissant un axe optique (AA) du dispositif d'éclairage.

Selon la présente invention, un élément d'occultation (60) est disposé sensiblement perpendiculairement à l'axe optique (AA) et à distance du plan focal objet de la lentille convergente (30), et à distance du plan focal objet de la lentille convergente (30).

## Description

La présente invention concerne les dispositifs d'éclairage destinés à équiper les véhicules automobiles, et plus particulièrement ceux qui sont du type à réflecteur elliptique.

On sait que des tels dispositifs d'éclairage comportent une source lumineuse située au premier foyer d'un réflecteur de type elliptique, une lentille convergente étant disposée en avant de la source lumineuse de telle manière que le foyer objet de cette lentille coïncide avec le deuxième foyer du réflecteur elliptique, les premier et deuxième foyers du réflecteur elliptique définissant un axe optique du dispositif d'éclairage ou de signalisation.

De cette manière, le miroir réflecteur elliptique forme de la source lumineuse une image réelle en son deuxième foyer, qui est alors projetée par la lentille convergente, le plus souvent plan convexe, sur la route en avant du véhicule. Le réflecteur elliptique peut alors avoir une conception prévue pour que le faisceau d'éclairage ainsi formé corresponde à la réglementation d'un faisceau réglementaire « de route ».

Avec un tel dispositif d'éclairage ou de signalisation, lorsqu'on désire produire un faisceau d'éclairage réglementaire « de croisement », il est connu de disposer un cache, s'étendant dans un plan perpendiculaire à l'axe optique, et situé dans le plan focal de la lentille convergente, le bord de ce cache étant disposé au voisinage immédiat de l'axe optique de manière à occulter une partie des rayons lumineux atteignant la lentille convergente et ainsi à déterminer une coupure supérieure dans le faisceau émergeant de la lentille convergente et projeté sur la route, afin de ne pas éblouir les conducteurs de véhicules circulant en sens inverse.

De manière également connue, le même projecteur peut être utilisé pour produire sélectivement ces deux faisceaux de route et de croisement. Il suffit en effet de rendre mobile le cache, entre une position où il forme la coupure du faisceau final de croisement en interceptant une partie des rayons lumineux, et une position où il est écarté du faisceau lumineux incident sur la lentille convergente de manière à former un faisceau de route sans coupure.

Dans le cas d'un tel projecteur susceptible d'émettre sélectivement des faisceaux de route ou de croisement, de photométries différentes, grâce à l'utilisation d'un cache mobile, le même réflecteur est utilisé pour produire ces deux faisceaux. Il est alors nécessaire que le réflecteur elliptique soit capable de construire un faisceau lumineux de grande portée pour un faisceau de route, et de grande largeur pour un faisceau de croisement. Ces deux caractéristiques étant contradictoires, le réflecteur elliptique est donc conçu selon un compromis pour pouvoir réaliser au mieux ces deux faisceaux.

Il en résulte donc que chaque faisceau, de route ou de croisement, considéré individuellement, bien que parfaitement conforme à la réglementation, ne présente pas toutes les caractéristiques d'un faisceau construit par un projecteur dédié à une fonction unique de croisement ou de route, en termes de confort visuel pour le conducteur du véhicule équipé d'un projecteur à faisceau unique. Il est donc souhaitable dans ce cas de corriger au moins l'un des faisceaux pour améliorer sa photométrie.

D'autre part, il est souhaitable de réaliser des fonctions d'éclairage qui viennent s'ajouter à celles qui sont prévues pour des faisceaux de route ou de croisement. Par exemple, par temps de pluie, on peut désirer éclairer moins le côté de la route sur lequel circulent les véhicules en sens inverse, de manière à ce que leurs conducteurs soient moins éblouis par la réflexion de la lumière sur la partie de chaussée située entre deux véhicules circulant en sens inverse.

La présente invention se place dans ce contexte et elle a pour but de proposer un dispositif d'éclairage pour véhicule automobile, qui produise au moins l'un des faisceaux de code ou de croisement de photométrie réglementaire, et qui comporte des moyens pour en modifier la photométrie en des endroits prédéterminés du faisceau lumineux.

La présente invention a donc pour objet un dispositif d'éclairage pour véhicule automobile, comportant une source lumineuse située au premier foyer d'un réflecteur de type elliptique, une lentille convergente étant disposée en avant de la source lumineuse de telle manière que le deuxième foyer du réflecteur elliptique soit contenu dans le plan focal objet de la lentille convergente, les premier et deuxième foyers du réflecteur elliptique définissant un axe optique du dispositif d'éclairage,.

Selon la présente invention, un élément d'occultation est disposé sensiblement perpendiculairement à l'axe optique, à distance du plan focal objet de la lentille convergente, et en dehors d'un plan vertical passant par l'axe optique.

Selon d'autres caractéristiques avantageuses et non limitatives de l'invention d'un premier mode de réalisation :
- l'élément d'occultation est disposé dans le dispositif d'éclairage de manière fixe par rapport à la source lumineuse ;
- l'élément d'occultation est formé sur une pièce solidaire du réflecteur ;
- le dispositif d'éclairage comporte un cache destiné à définir une coupure dans le faisceau lumineux émis ;
- le cache est mobile entre deux positions, une première position dans laquelle il intercepte une partie des rayons lumineux réfléchis par le réflecteur pour que le faisceau émergeant de la lentille comporte une coupure, et une deuxième position dans laquelle il laisse passer tous les rayons lumineux réfléchis par le réflecteur pour que le faisceau émergeant de la lentille ne comporte pas de coupure.

Selon des caractéristiques avantageuses et non limitatives de l'invention d'un deuxième mode de réalisation :
- l'élément d'occultation est formé sur un cache délimitant une coupure dans le faisceau lumineux émergeant de la lentille ;
- le cache est mobile entre deux positions, une première position dans laquelle il intercepte une partie des rayons lumineux réfléchis par le réflecteur pour que le faisceau émergeant de la lentille comporte une coupure, et une deuxième position dans laquelle il laisse passer tous les rayons lumineux réfléchis par le réflecteur pour que le faisceau émergeant de la lentille ne comporte pas de coupure ;
- l'élément d'occultation forme l'extrémité d'une pièce solidaire du cache.

Selon un troisième mode de réalisation, l'élément d'occultation est formé sur un support mobile. Le support est par exemple mobile en rotation autour d'un axe perpendiculaire à l'axe optique.

D'autres buts, caractéristiques et avantages de la présente invention ressortiront clairement de la description qui va maintenant être faite d'un exemple de réalisation donné à titre non limitatif en référence aux dessins annexés sur lesquels :
- La Figure 1 représente une vue schématique en coupe d'un projecteur de type elliptique selon un premier mode de réalisation de la présente invention ;
- La Figure 2 représente une vue en perspective schématique du projecteur de la Figure 1 ;
- La Figure 3 représente une vue de face d'un élément d'occultation utilisé dans le projecteur de la Figure 1 ;
- La Figure 4 représente une vue schématique en coupe d'un projecteur de type elliptique selon un deuxième mode de réalisation de la présente invention ;
- La Figure 5 représente une vue en perspective du projecteur de la Figure 4 ;
- La Figure 6 représente une vue schématique en perspective d'un projecteur de type elliptique selon un troisième mode de réalisation de la présente invention, pour l'émission d'un premier faisceau ;
- La Figure 7 représente une vue en perspective du projecteur de la Figure 6 pour l'émission d'un deuxième faisceau, et
- La Figure 8 représente une vue en perspective du projecteur de la Figure 6 pour l'émission d'un troisième faisceau.

Sur les différentes Figures, les éléments identiques ou jouant le même rôle sont affectés des mêmes signes de référence, éventuellement affectés d'un «prime» ou d'un « seconde ».

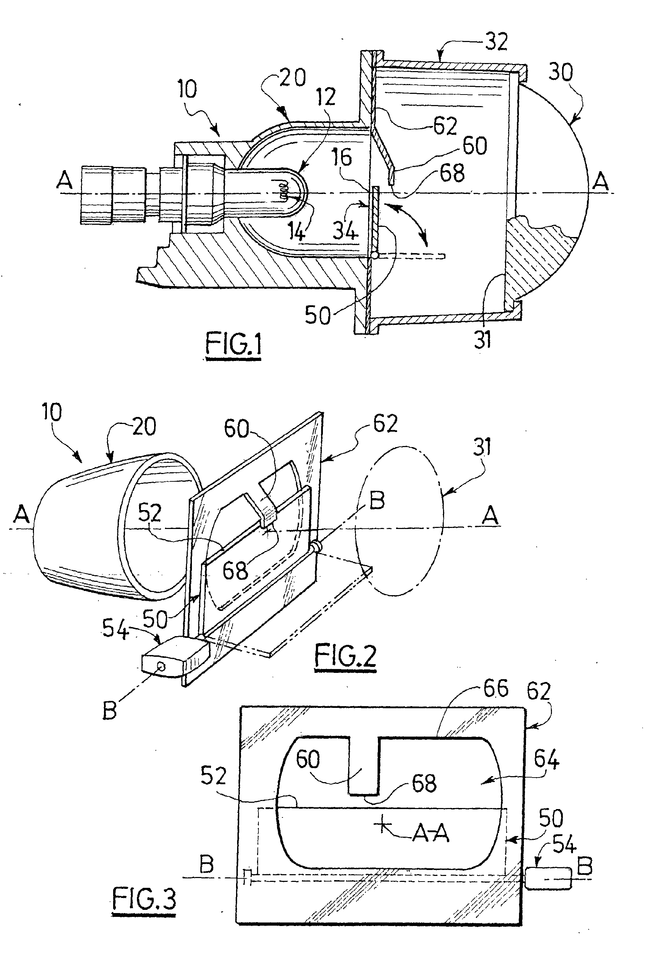

On a représenté sur la Figure 1 un projecteur 10 du type elliptique, comportant une ampoule 12 contenant une source lumineuse 14. Cette source lumineuse peut être, comme on l'a représenté, le filament d'une lampe à incandescence ou à halogènes, ou encore l'arc électrique d'une lampe à décharge. La source lumineuse est placée au premier foyer d'un réflecteur elliptique 20. Le projecteur 10 comporte également une lentille convergente 30, par exemple plan convexe, placée en avant du réflecteur 20 et de la source lumineuse 14, la face plane 31 étant située du côté du réflecteur 20.

Dans la présente description, les termes « avant » et « arrière » seront utilisés par référence au sens de propagation du faisceau lumineux émis par le projecteur 10. Sur la Figure 1, l'avant est ainsi à droite et l'arrière à gauche.

La lentille 30 est disposée dans une partie intermédiaire 32 à l'avant de la source lumineuse 14 de telle sorte que son plan focal 34 contienne le deuxième foyer 16 du réflecteur elliptique 20. De cette manière, les rayons lumineux émis par la source lumineuse 14 sont concentrés par le réflecteur elliptique 20 en une tache lumineuse en son deuxième foyer 16, pour former un faisceau de rayons sensiblement parallèles à la sortie de la lentille 30. Les deux foyers du réflecteur elliptique définissent l'axe optique AA du projecteur 10.

De manière connue, un cache 50 peut être disposé sur le trajet des rayons lumineux, de manière à éliminer dans le faisceau émergeant de la lentille 30 les rayons lumineux situés au dessus d'une limite prédéterminée appelée coupure, et à former ainsi un faisceau dit « de croisement » ou « code », n'éblouissant pas les conducteurs de véhicules circulant en sens inverse.

Le cache 50 est avantageusement disposé dans le plan focal 34 de la lentille 30, de manière à ce que son bord 52 délimite la forme de la coupure du faisceau lumineux émergeant de la lentille 30. De façon connue, le cache 50 peut être monté mobile entre deux positions, une position dans laquelle il élimine du faisceau final les rayons situés au dessus d'une coupure prédéterminée, et une position escamotée (représentée en pointillés sur les Figures 1 et 2) dans laquelle il laisse passer tous les rayons lumineux pour former ainsi un faisceau de route. Le cache peut par exemple être monté à pivotement autour d'un axe BB perpendiculaire à l'axe optique AA et être actionné par un moteur 54.

Conformément à la présente invention, il est prévu de disposer un élément d'occultation 60 sensiblement perpendiculairement à l'axe optique AA, à distance du plan focal objet 34 de la lentille convergente 30, et en dehors d'un plan vertical passant par l'axe optique AA. Dans le mode de réalisation des Figures 1 à 3, l'élément d'occultation 60 est formé sur une pièce intercalaire 62, par exemple disposée entre le réflecteur 20 et l'élément intermédiaire 32.

La pièce intercalaire 62 peut par exemple être constituée d'une plaque plane s'étendant dans le plan focal de la lentille 30 et dans laquelle est formée une ouverture centrale 64, l'élément d'occultation 62 étant formé sur une languette 62, par exemple de forme rectangulaire, s'étendant à partir du bord intérieur 66 de l'ouverture 64, de manière à ce que la languette 60 s'étende dans la partie supérieure du projecteur 10, c'est à dire de l'autre côté du cache 50 par rapport à l'axe optique AA. La languette 62 est pliée perpendiculairement au plan de la pièce intercalaire 62 de manière à ce que son bord inférieur 68 soit situé en dehors du plan focal de la lentille 30. Selon la partie du faisceau lumineux que l'on désire modifier, on pourra donner à l'élément d'occultation 60 une forme et une position par rapport à l'axe optique AA prédéterminées.

L'avantage de disposer l'élément d'occultation 60 en dehors du plan focal de la lentille 30 réside dans le fait qu'il ne forme dans le faisceau final aucune ombre épaisse et fortement contrastée, à l'instar de celle que forme le cache 50 définissant la coupure du faisceau de croisement, pour lequel on cherche justement à obtenir une limite franche entre la zone éclairée et la zone sombre. Étant plus ou moins fortement défocalisé par rapport à la lentille 30, l'élément d'occultation 60 n'a pour effet que de retirer des rayons lumineux de certaines zones du faisceau final.

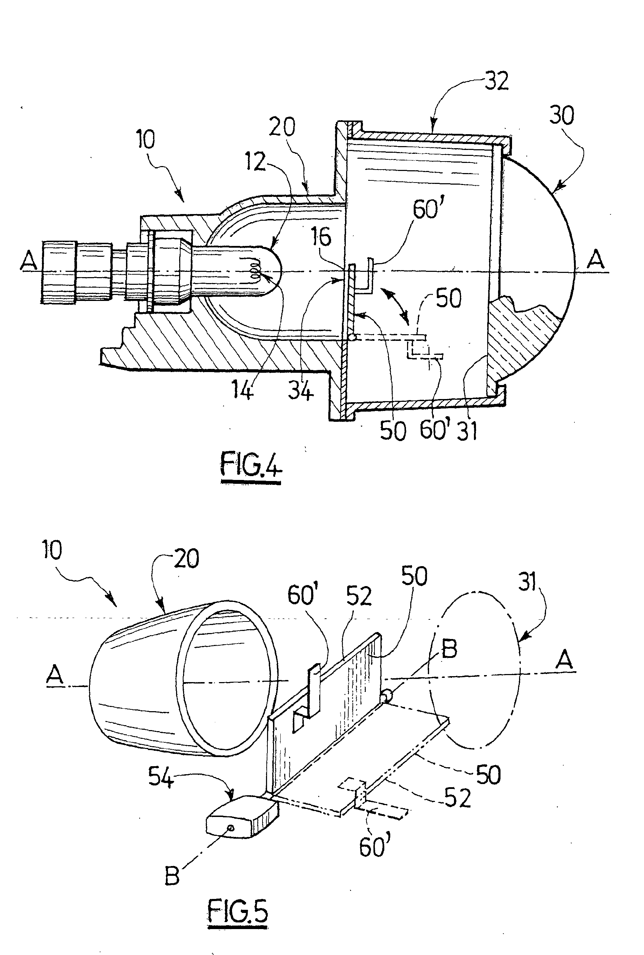

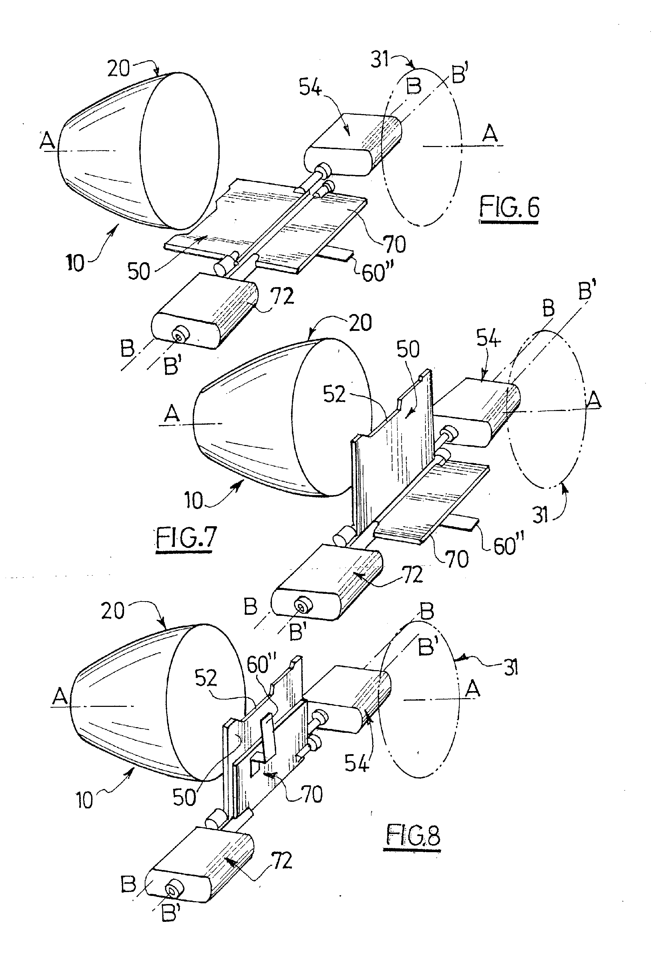

Selon le mode de réalisation des Figures 4 et 5, l'élément d'occultation 60' est formé sur le cache de coupure 50 lui-même, en formant par exemple l'extrémité d'une pièce solidaire du cache 50 s'étendant en dehors du plan du cache 50. Comme dans le mode de réalisation précédent, il est disposé, lorsque le cache 50 est en position pour former un faisceau de croisement, sensiblement perpendiculairement à l'axe optique, à distance du plan focal objet de la lentille convergente 30, et en dehors d'un plan vertical passant par l'axe optique AA. L'élément d'occultation 60' est constitué par une languette, par exemple de forme rectangulaire, s'étendant dans la partie inférieure du projecteur 10, c'est à dire du même côté que le cache 50 par rapport à l'axe optique AA. Là encore, selon la partie du faisceau lumineux que l'on désire modifier, on pourra donner à l'élément d'occultation 60' une forme et une position par rapport à l'axe optique AA prédéterminées lorsque le cache 50 est en position pour former un faisceau de croisement.

Par exemple, les projecteurs elliptiques dans lequel le cache formant la coupure du faisceau de croisement peut occuper deux positions pour former également un faisceau de route peuvent avoir des niveaux d'éclairement très forts au voisinage de cette coupure, rendant ainsi le faisceau de croisement non conforme à la réglementation. Par exemple, les points de 5 mesure appelés 50LR ou 25L1, situés juste en dessous de la coupure, dans la partie gauche du faisceau, peuvent être trop intenses pour un faisceau de croisement réglementaire. L'élément d'occultation selon la présente invention permet de résoudre ce problème pour un projecteur produisant sélectivement des faisceaux de croisement et de route.

Il suffit de disposer un élément d'occultation 60' de forme et de dimensions prédéterminées en dehors du plan focal de la lentille 30 pour qu'il ne retire des rayons lumineux que dans certaines zones du faisceau final. L'avantage de ce mode de réalisation réside dans le fait que ces rayons lumineux ne sont retirés que du faisceau de croisement, et non du faisceau de route, puisque l'élément d'occultation 60' est solidaire du cache mobile 50.

Selon le mode de réalisation des Figures 6 à 8, l'élément d'occultation 60" est formé sur un support mobile 70, de façon à pouvoir être interposé dans le faisceau lumineux en fonction des caractéristiques que l'on désire conférer à ce faisceau. On voit sur la Figure 8 un projecteur dans lequel le cache 50 et l'élément d'occultation 60" sont en position escamotée, de façon à n'intercepter aucun des rayons lumineux réfléchis par le réflecteur 20. Le projecteur 10 émet alors par exemple un faisceau de route. Sur la Figure 7, seul le cache 50 est amené dans la position dans laquelle son bord 52 se trouve dans le plan focal de la lentille 30. Le faisceau émis par le projecteur 10 est donc un faisceau à coupure, par exemple un faisceau de croisement.

Sur la Figure 8, l'élément d'occultation 60" est lui aussi amené dans une position dans laquelle il intercepte certains des rayons lumineux réfléchis par le réflecteur 10. L'élément d'occultation 60" est par exemple formé sur une partie 70 mobile autour d'un axe B'B', parallèle à l'axe BB de rotation du cache 50 et perpendiculaire à l'axe optique AA, sous l'effet d'un moteur 72.

Comme dans les modes de réalisation précédents, il est disposé, lorsqu'il est dans cette position, sensiblement perpendiculairement à l'axe optique AA, à distance du plan focal objet de la lentille convergente 30 et en dehors d'un plan vertical passant par l'axe optique AA, comme on le voit sur la Figure 8. L'élément d'occultation 60" est là encore constitué par une languette, par exemple de forme rectangulaire, s'étendant dans la partie inférieure du projecteur 10. De même que dans les modes de réalisation précédents, selon la partie du faisceau 5 lumineux que l'on désire modifier, on pourra concevoir l'élément d'occultation 60" pour qu'il ait une forme prédéterminée et une position par rapport à l'axe optique AA prédéterminée.

Par exemple, on peut désirer, par temps pluvieux, éclairer moins intensément le côté de la route sur lequel circulent les véhicules en sens inverse, de manière à ce que leurs conducteurs soient moins éblouis par la réflexion de la lumière sur la partie mouillée de chaussée située entre deux véhicules circulant en sens inverse. Il suffit alors de commander le moteur 72 pour qu'il amène l'élément d'occultation 60" dans la position représentée sur la Figure 8. La forme et la position de l'élément d'occultation 60" sont telles qu'il intercepte dans le faisceau lumineux émis par le projecteur 10 la majeure partie des rayons du faisceau de croisement situés dans la partie gauche du faisceau par exemple, pour un sens de circulation à droite.

On a donc bien réalisé selon la présente invention un dispositif d'éclairage pour véhicule automobile, qui produit un faisceau de route et/ou un faisceau de croisement, ayant une photométrie conforme à la réglementation en vigueur, et qui comporte un élément d'occultation pour modifier la photométrie du faisceau émis par le dispositif d'éclairage ou de signalisation en des endroits de ce faisceau prédéterminés du faisceau lumineux en fonction des zones de ce faisceau dans lesquelles il est désirable d'abaisser l'intensité lumineuse émise. Une telle modification du faisceau lumineux est obtenue à l'aide de moyens particulièrement simples, et donc fiables et peu onéreux.

Bien entendu, la présente invention n'est pas limitée aux modes de réalisation qui ont été décrits, mais l'homme du métier pourra au contraire lui apporter de nombreuses modifications qui rentrent dans son cadre. C'est ainsi par exemple que l'élément d'occultation pourra être disposé en avant ou en arrière du plan focal de la lentille convergente.

## Revendications

1. Dispositif d'éclairage pour véhicule automobile, comportant une source lumineuse (14) située au premier foyer d'un réflecteur (20) de type elliptique, une lentille convergente (30) étant disposée en avant de la source lumineuse (14) de telle manière que le deuxième foyer du réflecteur elliptique (20) soit contenu dans le plan focal objet de la lentille convergente (30), les premier et deuxième foyers du réflecteur elliptique (20) définissant un axe optique (AA) du dispositif d'éclairage, **caractérisé en ce qu'**un élément d'occultation (60, 60', 60") est disposé sensiblement perpendiculairement à l'axe optique (AA) et à distance du plan focal objet de la lentille convergente (30).

2. Dispositif selon la revendication 1, **caractérisé en ce que** l'élément d'occultation (60) est disposé dans le dispositif d'éclairage de manière fixe par rapport à la source lumineuse (14).

3. Dispositif selon la revendication 2, **caractérisé en ce que** l'élément d'occultation (60) est formé sur une pièce (62) solidaire du réflecteur (20).

4. Dispositif selon la revendication 3, **caractérisé en ce qu'**il comporte un cache (50) destiné à définir une coupure dans le faisceau lumineux émis.

5. Dispositif selon la revendication 4, **caractérisé en ce que** le cache (50) est mobile entre deux positions, une première position dans laquelle il intercepte une partie des rayons lumineux réfléchis par le réflecteur (20) pour que le faisceau émergeant de la lentille (30) comporte une coupure, et une deuxième position dans laquelle il laisse passer tous les rayons lumineux réfléchis par le réflecteur (20) pour que le faisceau émergeant de la lentille (30) ne comporte pas de coupure.

6. Dispositif selon la revendication 1, **caractérisé en ce que** l'élément d'occultation (60', 60") est formé sur un cache (50) délimitant une coupure dans le faisceau lumineux émergeant de la lentille (30).

7. Dispositif selon la revendication 6, **caractérisé en ce que** le cache (50) est mobile entre deux positions, une première position dans laquelle il intercepte une partie des rayons lumineux réfléchis par le réflecteur (20) pour que le faisceau émergeant de la lentille (30) comporte une coupure, et une deuxième position dans laquelle il laisse passer tous les rayons lumineux réfléchis par le réflecteur (20) pour que le faisceau émergeant de la lentille (30) ne comporte pas de coupure.

8. Dispositif selon la revendication 7, **caractérisé en ce que** l'élément d'occultation (60') forme l'extrémité d'une pièce solidaire du cache (50).

9. Dispositif selon la revendication 1, **caractérisé en ce que** l'élément d'occultation (60") est formé sur un support mobile (70).

10. Dispositif selon la revendication 9, **caractérisé en ce que** le support (70) est mobile en rotation autour d'un axe (B'B') perpendiculaire à l'axe optique (AA).
